# EUROPEAN PATENT SPECIFICATION

(11) **EP 1 036 448 B1**
(45) Date of publication and mention of the grant of the patent: **03.11.2004**
(21) Application number: 98947442.4
(22) Date of filing: 17.08.1998
(51) Int. Cl.: H04L 12/44, H04Q 3/00, H04L 12/56, H04Q 7/24

(54) **TELECOMMUNICATIONS NETWORK HAVING A TREE STRUCTURE**
TELEKOMMUNIKATIONSNETZ MIT BAUMSTRUKTUR
RESEAU DE TELECOMMUNICATIONS ARBORESCENT

(30) Priority: 19.08.1997 NL 1006797
(43) Date of publication of application: 20.09.2000
(73) Proprietor: Koninklijke KPN N.V., 9726 AE Groningen (NL)
(72) Inventor: SAMSOM, Sebastianus, Maria, NL-2725 PH Zoetermeer (NL)
(74) Representative: Wuyts, Koenraad Maria
(86) International application number: PCT/EP1998/005286
(87) International publication number: WO 1999/009714

(56) References cited:
- WO-A-95/17076
- MITTS H ET AL: "CONNECTIONLESS SIGNALING NETWORK LAYER IN UMTS" IEEE PERSONAL COMMUNICATIONS, vol. 3, no. 3, June 1996, pages 44-53, XP000593927 cited in the application

## Description

The invention relates to a telecommunications network having a tree structure and comprising at least
- a first node layer of a lowest level comprising a number of nodes, which nodes form the leaves of the tree structure,
- a second node layer of a higher level comprising a number of nodes, and
- a third node layer of a still higher level comprising at least one node,
the node of the third node layer comprising transmitter means for transmitting a signalling message wherein the node of the third node layer further comprises addressing means for feeding, to the signalling message, a node designation of a node associated with the signalling message from the first node layer, and a type code which designates a control function of a specific type or a node of a specific type for which the signalling message is intended.

Such a telecommunications network is disclosed in the international patent application WO 95/17076. In said patent application, there is shown a mobile telecommunications system having nodes which are mutually coupled in a tree structure by way of communication links. The nodes comprise control functions. The control of the mobile telecommunications system and the services supplied thereby is realised by interacting control functions. The interaction between said control functions is realised by exchanging signalling messages between the nodes. In the mobile telecommunications system according to said patent application, the first node layer consists of mobile terminals. A signalling message transmitted by any of the mobile terminals contains a type code as address. Said type code designates a type of node in the mobile telecommunications system (base station, local exchange) or a type of control function (e.g., call handling), for which the signalling message is intended. In said patent application, a type code is called a destination code of the implicit type. All nodes in the system are preprogrammed with data relating to the type of node and with data relating to the control functions comprised by the nodes. In the mobile telecommunications system described in said patent application, the nodes from the second node layer consist of base stations. The base station receiving the signalling message from the mobile terminal compares the type code of the signalling message to one or more predetermined values representing control functions in the base station. If the type code of the signalling message corresponds to one of the predetermined values, the signalling message is intended for the corresponding control function in the base station. The signalling message is then retained in the base station for further processing. If the type code of the signalling message does not correspond to the predetermined values, the signalling message is passed on to the node from the third node layer which is coupled to the base station. In the mobile communications system described in said patent application, this node is a Mobile Switching Centre (MSC) or a Local Exchange (LE). An advantage of type addressing, also referred to as the use of type codes in signalling messages, is, that the node from the first node layer, which transmits the signalling message, in this case the mobile terminal, need not know the structure or the allocation of control functions over the nodes of the mobile telecommunications system. Such should be the case if an explicit address is used which designates a specific control function in a specific node, for which the signalling message is intended.

The mobile telecommunications system described in the international patent application WO 95/17076 has a tree structure. This is to say that the nodes from a higher-level node layer, which is located closer to the root of the tree structure, are each coupled to one or more nodes from a lower-level node layer, which is located closer to the leaves of the tree structure. The nodes from said lower-level node layer are each again coupled to one or more nodes from a still lower-level node layer. Conversely, the nodes from a lower-level node layer are each coupled to only one node from a higher-level node layer. This means that the type addressing described in the patent application WO 95/17076 of a signalling message in a system having a tree structure works well only if there is transmitted a signalling message from a node from a lower-level node layer to a node from a higher-level node layer. Such is the case since, as already mentioned, in a tree structure each node from a lower-level node layer is coupled to only one node from a higher-level node layer. If from the type code it is apparent that the signalling message is not intended for the node from the lower-level node layer, this results in said node simply passing on the signalling message to said one node from the higher-level node layer. It is not possible, however, to address a signalling message being transmitted from a node from a higher-level node layer to a node from a lower-level node layer by way of a type code only. After all, the node from the higher-level node layer may generally pass on a signalling message, which is not intended for it, to numerous nodes from the lower-level node layer and cannot judge, on the basis of the type code alone, for which of said nodes the signalling message is intended.

For this reason, the telecommunications network described in the international patent application WO 95/17076, when transmitting a signalling message from a node from a higher-level node layer to a node from a lower-level node layer, makes use of explicit addressing, that is to say that the signalling message contains the address of the specific node for which it is intended (see page 13, line 27 up to and including page 14, line 27 of the international patent application WO 95/17076). On the basis of routing tables which are located in each node and which designate the communication link by which the addressed node may be reached, the signalling message is routed in the correct manner.

It is object of the invention to provide a telecommunications network having a tree structure, in which the use of type addressing is also possible in the event that a signalling message is transmitted from a node from a higher-ranked node layer to a node from a lower-ranked node layer. For this purpose, the telecomunications network according to the invention is characterised in that signalling messages are transmitted from a higher ranked node to a lower ranked node by defining a path through the tree structure, the said path being determined by a node destination of the lowest layer, the node not being necessarily the designation of the signalling message. The node designation is preferably formed by an address or a number of the node in question from the first node layer. On the basis of the node designation, there has been defined a path through the tree structure along which the signalling message must be routed, namely, the path leading from the node by which the signalling message is being transmitted, to the node in the first node layer which is designated by the node designation. Said node in the first node layer is not necessarily the destination of the signalling message. The destination of the signalling message may also be a node located on the path between the node which transmitted the signalling message and the node from the first node layer which is designated by the node designation. The type node is used to determine the node which is the destination of the signalling message. For the use of both a node designation of a node from the first node layer and a type code, therefore, a signalling message, which is transmitted from a node from a higher-ranked node layer to a node from a lower-ranked node layer, may be routed in an unequivocal manner. Incidentally, it should be noted that the tree structure is intended to refer to a logical structure which may be implemented in a physical network. Said physical network itself does not necessarily have a tree structure.

In the telecommunications network according to the invention, the method of addressing signalling messages does not depend on the allocation of control functions among the nodes in the system. This means that the allocation of control functions may be altered without the method of addressing signalling messages having to be adjusted. As a result, the telecommunications network according to the invention is highly flexible. Furthermore, the telecommunications network according to the invention has the advantage that a network administrator may permit an external party, such as a service provider, to make use of the network without having to supply information to said party on the allocations of control functions and the structure of the network. The situtation in which a service provider transmits signalling messages may occur, e.g., if said service provider supplies additional services to his customers by means of a Service Control Point (SCP) coupled by way of a node of the telecommunications network and managed by the service provider himself.

A first embodiment of the telecommunications network according to the invention is characterised in that at least one node from the second node layer comprises comparing means for comparing at least part of the type code which is located in the signalling message transmitted by the node from the third node layer, to at least part of a predetermined value designating a control function of a specific type which is present in the node from the second node layer, or designates the type of the node from the second node layer, with the signalling message, if the at least one part of the type code corresponds to the at least one part of the predetermined value, being retained in the node from the second node layer for processing. In said embodiment, it is determined in a simple manner whether the signalling message is intended for the node from the second node layer or not. If the node from the second node layer contains several control functions, the type code from the signalling message is compared to several predetermined values associated with said control functions. If the signalling message is not intended for the node from the second node layer, it is passed on in the direction of the nodes which form the leaves of the tree.

A second embodiment of the telecommunications network according to the invention is characterised in that the node from the second node layer contains routing means coupled to the comparing means for routing the signalling message as a function of at least part of the node designation, which is located in the signalling message, if the signalling message is not intended for the node from the second node layer. This is preferably done on the basis of a table which is located in the node from the second node layer. This includes the communication link by which the node designated by the node designation may be reached.

The invention further relates to a node for use in the telecommunications network according to claim 4, wherein said node is designed to function as a node from the third node layer and which node comprises transmitting means for transmitting a signalling message. The node according to the invention is characterised in that the node further comprises addressing means for feeding, to the signalling message, a node designation of a node associated with the signalling message from the first node layer, and a type code designating a control function or a node of a specific type, for which the signalling message is intended.

Further, the invention relates to a node for use in the telecommunications network according to claim 5, wherein said node is designed to function as a node from the second node layer. The node according to the invention is characterised in that the node comprises comparing means for comparing at least part of a type code located in the signalling message transmitted by the node from the third node layer, to at least part of a predetermined value, which designates a control function of a specific type, which is present in the node or designates the type of node, with the signalling message, if the at least one part of the type code corresponds to the at least one part of the predetermined value, being retained in the node for processing.

A first embodiment of the node from the second node layer according to the invention is characterised in that the node comprises routing means coupled to the comparing means for routing the signalling message as a function of at least part of a node designation located in the signalling message, of a node from the first node layer associated with the signalling message, if the signalling message is not intended for the node.

The invention will now be described in more detail by way of example by reference to the accompanying drawing, in which:
FIG. 1 shows a mobile telecommunications system comprising a telecommunications network according to the invention,
FIG. 2 shows a device for generating and transmitting signalling messages for use in nodes of the telecommunications network according to the invention,
FIG. 3 shows a device for receiving signalling messages for use in nodes of the telecommunications network according to the invention,
FIG. 4 shows a signalling message for use in the telecommunications network according to the invention.

In the figures, only those elements are shown which are of importance for understanding the invention.

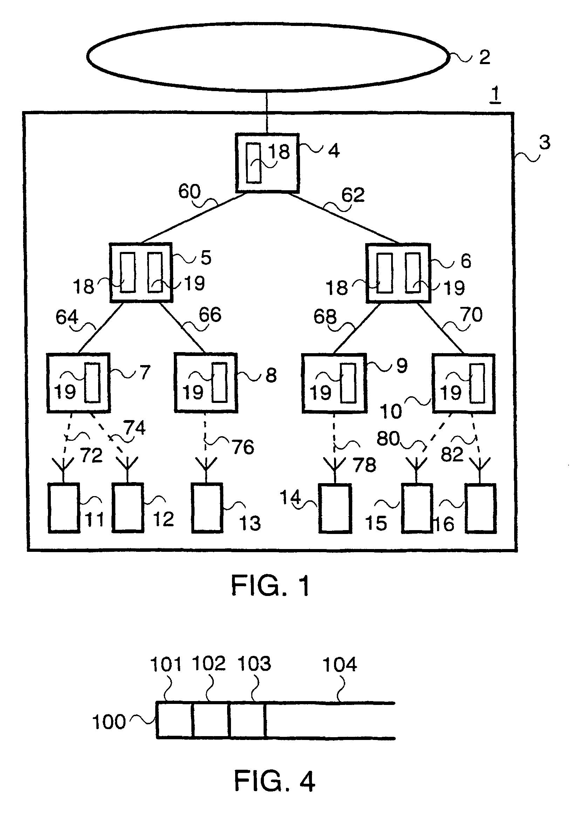

Referring now to fig. 1 a mobile telecommunications system 1 is shown schematically. The mobile telecommunications system 1 comprises a core network 2 and a telecommunications network 3 according to the invention, which has the function of an access network. The telecommunications network 3 is built up from nodes. Said nodes are mutually coupled by way of communication links. The nodes comprise control functions. The control of the telecommunications network 3 and of the services supplied thereby is realised by interactive control functions. The interaction between said control functions is realised by exchanging signalling messages between the nodes.

The telecommunications network 3 has a tree structure. A node 4 coupled to the core network 2 is the root of the tree structure. The node 4 is coupled, by way of a communication link 60, to a node 5 and, by way of a communication link 62, to a node 6. The node 5 is coupled, by way of a communication link 64, to a node 7 and, by way of a communication link 66, to a node 8. The node 6 is coupled, by way of a communication link 68, to a node 9 and, by way of a communication link 70, to a node 10. The node 7 is coupled, by way of a (radio) communication link 72, to a node 11 and, by way of a (radio) communication link 74, to a node 12. The node 8 is coupled, by way of a (radio) communication link 76, to a node 13. The node 9 is coupled, by way of a (radio) communication link 78, to a node 14. The node 10 is coupled, by way of a (radio) communication link 80, to a node 15 and, by way of a (radio) communication link 82, to a node 16. The nodes 11, 12, 13, 14, 15 and 16, which consist of mobile terminals, are the leaves of the tree structure. A tree structure is characterised by the fact that there is only one path between a node which forms a root of the tree structure and a node which forms a leaf of the tree structure. Incidentally, it should be noted that the tree structure is intended to refer to a logical structure which may be implemented in a physical network. Said physical network itself does not necessarily have a tree structure. The nodes of the tree structure are coupled to one another in a hierarchical manner. In the present application, the node layer in which the node 4 is located and which forms the root of the tree structure, is defined as the node layer of the highest level, and the node layer in which the nodes 11, 12, 13, 14, 15 and 16 are located and which form the leaves of the tree structure, as the node layer of the lowest level. Node layers which are located closer to the root of the tree structure are of a higher level than node layers which are located closer to the leaves of the tree structure. The direction from the leaves of the tree structure to the root of the tree structure is defined as the upward direction. The direction from the root of the tree structure to the leaves of the tree structure is defined as the downward direction. A further characteristic of a tree structure is that the nodes from a higher-level node layer, which is located closer to the root of the tree structure, are each coupled to one or more nodes from a lower-level node layer, which is located closer to the leaves of the tree structure. Conversely, the nodes from a lower-level node layer are each coupled to only one node from a higher-level node layer.

Apart from the node layers comprising the nodes which form the root and the leaves of the tree structure, respectively, the telecommunications network 3 comprises two more intermediate node layers, namely, the node layer comprising the nodes 5 and 6, and the node layer comprising the nodes 7, 8, 9 and 10. Incidentally, it should be noted that the number of mobile terminals (nodes from the lowest node layer) in a practical mobile telecommunications system 1 is much larger than the number shown in FIG. 1.

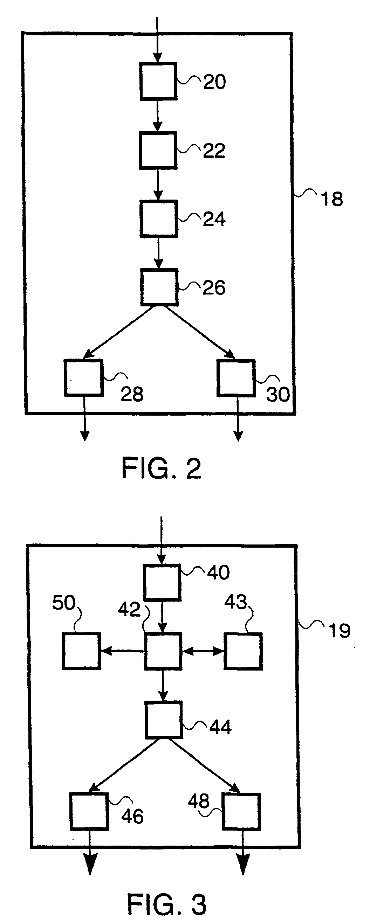

The nodes 4, 5 and 6 all comprise a device 18 according to the invention for generating and transmitting signalling messages in the downward direction. The nodes 5, 6, 7, 8, 9 and 10 all comprise a device 19 according to the invention for receiving signalling messages transmitted in the downward direction. Of course, the nodes 4, 5, 6, 7, 8, 9 and 10 also comprise devices for receiving signalling messages transmitted in the upward direction, and the nodes 5, 6, 7, 8, 9, 10, 11, 12, 13, 14, 15 and 16 also comprise devices for transmitting signalling messages in the upward direction. These, however, are known per se, e.g., from the figures 2 and 3 of the patent application WO 95/17076, and are not of importance for understanding the invention. This is why they are not shown in the figure. The nodes 11, 12, 13, 14, 15 and 16 from the lowest node layer - the mobile terminals - comprise devices known per se for receiving signalling messages transmitted in the downward direction. Said devices, too, are known per se and are therefore not shown in the figure.

FIG. 2 shows the device 18 in more detail. The device 18 comprises a receiver 20. The receiver 20 comprises one or more inputs (only one input is shown) which are coupled, by way of a communication link, to nodes from a lower node layer and, if the device 18 is located in the node 4 from the highest node layer, a further input for receiving signalling messages originating from the core network 2. The receiver 20 possibly comprises a still further input coupled to a Service Control Point (SCP) which is not shown. An output of the receiver 20 is coupled to an input of a processor 22. An output of the processor 22 is coupled to an input of addressing means 24. An output of the addressing means 24 is coupled to an input of routing means 26. A first output of the routing means 26 is coupled to an input of a first transmitter 28. An output of the first transmitter 28 is coupled, by way of a communication link, to a node from a lower-level node layer. A second output of the routing means 26 is coupled to an input of a second transmitter 30. An output of the second transmitter 30 is coupled, by way of a communication link, to a node from a lower-level node layer.

The device 18 operates as follows. If the processor 22 decides, on the basis of a stimulus, that there must be transmitted a signalling message to a lower-ranked node in the access network, the processor 22 generates a part comprising the contents of the signalling message and transmits it to the addressing means 24. There are three stimuli, on the basis of which the processor 22 may decide to generate a signalling message, namely:
- a signalling message received by way of the receiver 20 from the core network 2,
- a signalling message received by way of the receiver 20 from a node from a lower node layer in the telecommunications network 3, and
- an external stimulus originating, e.g., from a Service Control Point (SCP), which is coupled to the node in which the device 18 is located, which SCP is managed by a service provider who supplies additional services to his users by way of the SCP.

Under control of the processor 22, the addressing means 24 add a number of parameters to the part comprising the contents. An example of a signalling message 100, which is used according to the invention, is shown in FIG. 4. The signalling message 100 comprises a first field 101 which designates the addressing method to be used, e.g., explicit addressing or type addressing, which both are known per se and are described in the patent application WO 95/17076, or the type addressing according to the invention. Of course, adding the first field 101 makes sense only if the processor 22 and the addressing means 24 are capable of generating signalling messages having different addressing methods. If the addressing method according to the invention is used, a second field 102 comprises a type code associated with a type of node or a type of control function for which the signalling message 100 is intented. If the addressing method according to the invention is used, a third field 103 comprises a node designation of a node associated with the signalling message 100 from the node layer of the lowest level. The node designation is preferably formed by an address or a number of the node in question from the node layer of the lowest level. On the basis of the node designation, a path has been defined for the signalling message 100 through the tree structure, namely, the path between the node generating and transmitting the signalling message 100, and the node associated with the node designation. A fourth field 104 comprises a part containing the contents of the signalling message 100, which has been generated by the processor 22.

The signalling message 100 is then routed, as a function of the node designation 103, by the routing means 26 to the first transmitter 28 or the second transmitter 30. For this purpose, the routing means 26 comprise a table in which, for each of the nodes from the lowest node layer, there is included routing information. Said routing information indicates by way of which path, i.e., by way of which communication links, a specific node may be reached. The information in the table is adjusted, as soon as a node from the lowest node layer, consisting of a mobile terminal in the exemplary embodiment, is coupled to another node from the node layer immediately above, e.g., in the event of a handover. Methods for adjusting the table are known per se and are referred to in "Connectionless signalling network layer in UMTS", Mitts et al., IEEE Personal Communications, June 96, pp. 44-53, in the paragraph "Routing Update". If the telecommunications network 3 according to the invention is used in a "wire-bound" telecommunications system, the nodes from the lowest node layer are basically continuously located in the same place in the network. In this case, the routing information basically need not be adjusted.

FIG. 3 shows the device 19 in more detail. The device 19 comprises a receiver 40, of which an input is coupled to a node from a higher-ranked node layer. An output of the receiver is coupled to an input of comparing means 42. A first output of the comparing means 42 is coupled to an input of a processor 50. A second output of the comparing means 42 is coupled to an input of routing means 44. An input/output of the comparing means 42 is coupled to a programmable memory 43. A first output of the routing means 44 is coupled to an input of a first transmitter 46. An output of the first transmitter 46 is coupled, by way of a communication link, to a node from a lower-level node layer. A second output of the routing means 44 is coupled to an input of a second transmitter 48. An output of the second transmitter 48 is coupled, by way of a communication link, to a node from a lower-level node layer. Incidentally, the number of transmitters may be greater than the number shown (two). In nodes in which both the device 18 and the device 19 are present, the processors 22 and 50 may be the same processor. In addition, the routing means 26 and 44 may be the same, as well as the transmitters 28 and 46, and 30 and 48, respectively.

The device 19 operates as follows. A signalling message 100 received by the receiver 40 from a node from a higher-level node layer is fed to the comparing means 42. The comparing means 42 compare the type code 102, which is located in the signalling message 100, to one or more predetermined values which are located in the programmable memory 43. The predetermined values each represent a control function which is located in the node in which the device 19 is included. If the type code 102 corresponds to one of the predetermined values, the signalling message 100 is then output to the processor 50 for further processing. If the type code 102 does not correspond to any of the predetermined values, the signalling message 100 is not intended for any of the control functions located in the device. In this case, the signalling message must be passed on to a node from a lower-level node layer. To this end, the comparing means 42 output the signalling message 100 to the routing means 44. The signalling message 100 is then routed, as a function of the node designation 103, by the routing means 44, to one of the transmitters. To this end, the routing means 44 comprise, just as the routing means 26 in the device 18 as shown in FIG. 2, a table in which, for each of the nodes from the lowest node layer, there is included routing information.

Now suppose that, in the telecommunications network 3 having the tree structure shown in FIG. 1, the node 4 from the node layer of the highest level transmits, in the downward direction, a signalling message 100 which is associated with node 14 (mobile terminal) and which is intended for a control function which is accommodated in the node layer of the lowest-but-one level. The transmission of said signalling message 100 takes place as follows. The device 18, which is located in node 4, provides the signalling message 100 with a type code 102 which indicates that the signalling message 100 is intended for said control function, and with a node designation 103 associated with the mobile terminal 14. The node 4, therefore, need not be aware of the node layer in which said control function is located. The signalling message 100 is then routed to node 6 on the basis of the routing information associated with the mobile terminal 14, which routing information indicates that the mobile terminal 14 is accessible by way of communication link 62. The signalling message 100 is received by the node 6. The type code 102 is compared to predetermined values which represent the control functions present in the node 6. Since the control function associated with the type code 102 present in the signalling message 100 is not present in the node 6, the type code 102 does not correspond to the predetermined values. The signalling message 100 must therefore be passed on to a lower-ranked node. This is done once again on the basis of the node designation 103 of the mobile terminal 14. For the purpose of routing the signalling message 100 to the correct node, routing information associated with the mobile terminal 14 is used, which routing information indicates that the mobile terminal 14 is accessible by way of communication link 68. The signalling message 100 is therefore routed to node 9 by way of the communication link 68. The type code 102 of the signalling message 100 is then compared, in the node 9, to predetermined values which represent the control functions present in the node 9. One of said predetermined values represents the control function present in the node 9, for which the signalling message is intended, and therefore corresponds to the type code 102 present in the signalling message 100. The signalling message 100 is therefore retained in the node 9 for further processing.

Now suppose that, in the telecommunications network 3 having the tree structure shown in FIG. 1, the node 5 from the node layer of the highest-but-one level transmits, in the downward direction, a signalling message 100 which is associated with node 12 (mobile terminal) and which is intended for a control function accommodated in the node layer of the lowest level. The transmission of said signalling message 100 takes place as follows. The device 18, which is located in node 5, provides the signalling message 100 with a type code 102 which indicates that the signalling message 100 is intended for said control function, and with a node designation 103 associated with the mobile terminal 12. The node 5, therefore, need not be aware of the node layer in which said control function is located. The signalling message 100 is then routed to node 7 on the basis of the routing information associated with the mobile terminal 12, which routing information indicates that the mobile terminal 12 is accessible by way of communication link 64. The signalling message 100 is received by the node 7. The type code 102 is compared to predetermined values which represent the control functions present in the node 7. Since the control function associated with the type code 102 present in the signalling message 100 is not present in the node 7, the type code 102 does not correspond to the predetermined values. The signalling message 100 must therefore be passed on to a lower-ranked node. This is done once again on the basis of the node designation 103 of the mobile terminal 12. For the purpose of routing the signalling message 100, there is used routing information associated with the mobile terminal 12, which routing information indicates that the mobile terminal 12 is accessible by way of communication link 74. The signalling message 100 is therefore routed, by way of the communication link 74, to the mobile terminal 12, where it is processed.

In the telecommunications network 3 according to the invention, a free allocation of control functions among the nodes is possible without affecting the addressing of signalling messages. The device generating a signalling message need not dispose of the allocation of control functions among the nodes in the system. Only the predetermined values representing the control functions present in a node must be correctly programmed into the memory 43. The freedom in the function allocation is advantageous. The network administrator has the option of distributing the control functions among the nodes as a function of, e.g., quality requirements or economic considerations. Furthermore, the mobile telecommunications system according to the invention has the advantage that an administrator of the system may permit an external party, such as a service provider, to make use of the system without having to provide said party with information on the structure and the function allocation.

It will be understood by those skilled in the art that the invention is not limited to the embodiments shown, and that many modifications and amendments are possible without departing from the scope of the invention. Thus, the invention may also be applied, apart from in mobile telecommunications systems, in so-called wire-bound telecommunications systems. In addition, the invention may also be applied in telecommunications networks having more node layers or, conversely, fewer node layers than the telecommunications network 3 shown in FIG. 1, or in telecommunications networks comprising more or, conversely, fewer nodes in each node layer than shown in FIG. 1. The invention may also be applied to telecommunications networks having another symmetrical, or even asymmetrical, tree structure than the structure shown in FIG. 1. Furthermore, the signalling message 100 may have still other fields than the ones shown in FIG. 4, or the fields may be present in the signalling message in another sequence than the one shown in FIG. 4. The node designation 103 in the signalling message 100 may also be formed, instead of by an address or a number of a node, by routing information which designates the entire path between the node transmitting the signalling message 100 and the node associated with the node designation 103. Finally, it is possible that the node designation 103 consists of a number of a node in which the routing information relating to the path towards said node is implicitly present. In this case, the number consists of several groups of digits, each of which indicates a specific communication link on said path between the node transmitting the signalling message 100 and the node associated with the node designation 103.

## Claims

1. A telecommunications network (3) having a tree structure and comprising at least
- a first node layer of a lowest level comprising a number of nodes (11,12,13,14,15,16), which nodes form the leaves of the tree structure,
- a second node layer of a higher level comprising a number of nodes (5,6,7,8,9,10), and
- a third node layer of a still higher level comprising at least one node (4,5,6),
the node (4,5,6) of the third node layer comprising transmitter means (18) for transmitting a signalling message (100), wherein the node (4,5,6) of the third node layer further comprises addressing means (24) for feeding, to the signalling message (100), a node designation (103) of a node (11,12,13,14,15,16) associated with the signalling message (100) from the first node layer, and a type code (102) which designates a control function of a specific type or a node of a specific type for which the signalling message (100) is intended, **characterised in that** the transmitter means (18) are fit to transmit the signalling message to a lower ranked node by defining a path through the tree structure, the said path being determined by a node designation of the lowest level, the node not being necessarily the destination of the signalling message.

2. The telecommunications network (3) as claimed in claim 1, **characterised in that** at least one node (5,6,7,8,9,10) of the second node layer comprises comparing means (42) for comparing at least part of the type code (102) which is located in the signalling message (100) transmitted by the node (4,5,6) of the third node layer, with at least part of a predetermined value which designates a control function of a specific type which is present in the node from the second node layer, or designates the type of the node (5,6,7,8,9,10) from the second node layer, the relevant node or nodes (5,6,7,8,9,10) of the second node layer comprising means for retaining the signalling message (100) for processing, if the at least one part of the type code (102) corresponds to the at least one part of the predetermined value.

3. The telecommunications network as claimed in claim 2, **characterised in that** the node (5,6,7,8,9,10) of the second node layer comprises routing means (44) coupled to the comparing means (42) for routing the signalling message (100) as a function of at least part of the node designation (103), which is located in the signalling message (100), if the signalling message (100) is not intended for the node (5,6,7,8,9,10) of the second node layer.

4. A node (4,5,6,) of a third node layer for use in a telecommunications network (3) having a tree structure, which network comprises at least
- a first node layer of a lowest level comprising a number of nodes (11,12,13,14,15,16), which nodes form the leaves of the tree structure,
- a second node layer of a higher level comprising a number of nodes (5,6,7,8,9,10), and
- a third node layer of a still higher level comprising at least one node (4,5,6),
the node (4,5,6) comprising transmitter means (18) for transmitting a signalling message (100), and addressing means (24) for feeding, to the signalling message (100), a node designation (103) of a node (11,12,13,14,15,16) associated with the signalling message (100) from the first node layer, and a type code (102) which designates a control function of a specific type or a node of a specific type for which the signalling message (100) is intended, **characterised by** means for transmitting signalling messages to a lower ranked node by defining a path through the tree structure, the said path being determined by a node designation of the lowest level, the node not being necessarily the destination of the signalling message.

5. A node (5,6,7,8,9,10) of a second node layer for use in a telecommunications network (3) having a tree structure, which network comprises at least
- a first node layer of a lowest level comprising a number of nodes (11,12,13,14,15,16), which nodes form the leaves of the tree structure,
- a second node layer of a higher level comprising a number of nodes (5,6,7,8,9,10), and
- a third node layer of a still higher level comprising at least one node (4,5,6),
the node (4,5,6) of the third node layer comprising transmitter means (18) for transmitting a signalling message (100), and addressing means (24) for feeding, to the signalling message (100), a node designation (103) of a node (11,12,13,14,15,16) associated with the signalling message (100) from the first node layer, and a type code (102) which designates a control function of a specific type or a node of a specific type for which the signalling message (100) is intended, **characterised by** means for transmitting signalling messages to a lower ranked node by defining a path through the tree structure, the said path being determined by a node designation of the lowest level, the node not being necessarily the destination of the signalling message.

## Patentansprüche

1. Telekommunikationsnetzwerk (3) mit einer Baumstruktur und mit mindestens
- einer ersten Knotenschicht eines niedrigsten Niveaus mit einer Anzahl von Knoten (11, 12, 13, 14, 15, 16), welche Knoten die Blätter der Baumstruktur bilden,
- einer zweiten Knotenschicht eines höheren Niveaus mit einer Anzahl von Knoten (5, 6, 7, 8, 9, 10), und
- einer dritten Knotenschicht von nochmals höherem Niveau mit mindestens einem Knoten (4, 5, 6),
wobei der Knoten (4, 5, 6) der dritten Knotenschicht Übertragungsmittel (18) umfasst, um eine Signalisiernachricht (100) zu übertragen, wobei der Knoten (4, 5, 6) der dritten Knotenschicht weiterhin Adressierungsmittel (24), um zu der Signalisiernachricht (100) eine Knotenzuweisung (103) eines Knotens (11, 12, 13, 14, 15, 16) hinzuzufügen, welche der Signalisiernachricht (100) von der ersten Knotenschicht zugeordnet ist, und einen Typencode (102) umfasst, welcher eine Steuerfunktion eines spezifischen Typs oder einen Knoten eines spezifischen Typs anzeigt, für den die Signalisiernachricht (100) vorgesehen ist, **dadurch gekennzeichnet, dass** die Übertragungsmittel (18) bereit sind, die Signalisiernachricht an einen niedriger im Rang stehenden Knoten durch Definieren eines Weges durch die Baumstruktur hindurch zu übermitteln, wobei der besagte Weg durch einen Knotenhinweis des niedrigsten Niveaus bestimmt wird, wobei der Knoten nicht notwendigerweise das Ziel der signalisierten Nachricht ist.

2. Telekommunikationsnetzwerk (3) nach Anspruch 1, **dadurch gekennzeichnet, dass** mindestens ein Knoten (5, 6, 7, 8, 9, 10) der zweiten Knotenschicht Vergleichermittel (42) umfasst, um mindestens einen Teil des Typencodes (102), der in der Signalisiernachricht (101) angeordnet ist, welche von dem Knoten (4, 5, 6) der dritten Knotenschicht übertragen wird, mit mindestens einem Teil eines vorbestimmten Wertes zu vergleichen, welcher eine Steuerfunktion eines bestimmten Typs anzeigt, welcher in dem Knoten der zweiten Knotenschicht vorhanden ist, oder einen Typ des Knotens (5, 6, 7, 8, 9, 10) der zweiten Knotenschicht anzeigt, wobei der relevante Knoten oder die relevanten Knoten (5, 6, 7, 8, 9, 10) der zweiten Knotenschicht Mittel umfassen, um die Signalisiernachricht (100) zur Verarbeitung zurückzuhalten, falls der mindestens eine Teil des Typencodes (102) dem mindestens einen Teil des vorbestimmten Wertes entspricht.

3. Telekommunikationsnetzwerk nach Anspruch 2, **dadurch gekennzeichnet, dass** der Knoten (5, 6, 7, 8, 9, 10) der zweiten Knotenschicht Weiterleitungsmittel (44) umfasst, die mit den Vergleichermitteln (42) gekoppelt sind, um die Signalisiernachricht (100) als Funktion von mindestens einem Teil des Knotenhinweises (103) weiterzuleiten, der in der Signalisiernachricht (100) angeordnet ist, falls die Signalisiernachricht (100) nicht für den Knoten (5, 6, 7, 8, 9, 10) der zweiten Knotenschicht vorgesehen ist.

4. Knoten (4, 5, 6) einer dritten Knotenschicht zum Einsatz in einem Telekommunikationsnetzwerk (3) mit einer Baumstruktur, welches Netzwerk mindestens umfasst
- eine erste Knotenschicht eines niedrigsten Niveaus mit einer Anzahl von Knoten (11, 12, 13, 14, 15, 16), welche Knoten die Blätter der Baumstruktur bilden,
- eine zweite Knotenschicht eines höheren Niveaus mit einer Anzahl von Knoten (5, 6, 7, 8, 9, 10), und
- eine dritte Knotenschicht eines nochmals höheren Niveaus mit mindestens einem Knoten (4, 5, 6),
wobei der Knoten (4, 5, 6) Übertragungsmittel (18), um eine Signalisiernachricht (100) zu übertragen, und Adressiermittel (24) umfasst, um an die Signalisiernachricht (100) einen Knotenhinweis (103) eines Knotens (11, 12, 13, 14, 15, 16), der der Signalisiernachricht (100) der ersten Knotenschicht zugeordnet ist, und einen Typencode (102) zu liefern, der eine Steuerfunktion eines bestimmten Typs oder einen Knoten eines bestimmten Typs anzeigt, für den die Signalisiernachricht (100) vorgesehen ist, **gekennzeichnet durch** Mittel zum Übertragen von Signalisiernachrichten an einen niedriger im Rang stehenden Knoten **durch** Definieren eines Weges **durch** die Baumstruktur, wobei der besagte Weg **durch** einen Knotenhinweis des niedrigsten Niveaus bestimmt wird, wobei der Knoten nicht notwendigerweise das Ziel der Signalisiernachricht ist.

5. Knoten (5, 6, 7, 8, 9, 10) einer zweiten Knotenschicht zum Einsatz in einem Telekommunikationsnetzwerk (3) mit einer Baumstruktur, welches Netzwerk mindestens umfasst:
- eine erste Knotenschicht eines niedrigsten Niveaus mit einer Anzahl von Knoten (11, 12, 13, 14, 15, 16), welche Knoten die Blätter der Baumstruktur bilden,
- eine zweite Knotenschicht eines höheren Niveaus mit einer Anzahl von Knoten (5, 6, 7, 8, 9, 10), und
- eine dritte Knotenschicht eines nochmals höheren Niveaus mit mindestens einem Knoten (4, 5, 6),
wobei der Knoten (4, 5, 6) der dritten Knotenschicht Übertragungsmittels (18), um eine Signalisiernachricht (100) zu übertragen, und Adressiermittel (24) umfasst, um an die Signalisiernachricht (100) einen Knotenhinweises (103) eines Knotens (11, 12, 13, 14, 15, 16), der der Signalisiernachricht (100) der ersten Knotenschicht zugeordnet ist, und einen Typencode (102) zu liefern, der eine Steuerfunktion eines bestimmten Typs oder einen Knoten eines bestimmten Typs anzeigt, für den die Signalisiernachricht (100) vorgesehen ist, **gekennzeichnet durch** Mittel zum Übertragen von Signalisiernachrichten an einen niedriger im Rang stehenden Knoten **durch** Definieren eines Weges **durch** die Baumstruktur, wobei der besagte Weg **durch** einen **durch** einen Knotenhinweis des niedrigsten Niveaus bestimmt wird, wobei der Knoten nicht notwendigerweise das Ziel der Signalisiernachricht ist.

## Revendications

1. Réseau de télécommunications (3) possédant une structure arborescente et comportant au moins
- une première couche de noeuds située au niveau le plus bas et comprenant un nombre de noeuds (11,12,13,14,15, 16), lesquels noeuds forment les feuilles de la structure arborescente,
- une seconde couche de noeuds possédant un niveau plus élevé et comprenant un nombre de noeuds (5,6,7,8,9,10), et
- une troisième couche de noeuds ayant un niveau encore plus élevé, comprenant au moins un noeud (4,5,6),
le noeud (4,5,6) de la troisième couche de noeuds comprenant des moyens émetteurs (18) pour émettre un message de signalisation (100), dans lequel le noeud (4,5,6) de la troisième couche de noeuds comprend en outre des moyens d'adressage (24) pour envoyer, au message de signalisation (100), une désignation (103) d'un noeud (11,12,13, 14,15,16) associé au message de signalisation (100) à partir de la première couche de noeuds, et un code de type (102) qui désigne une fonction de commande d'un type spécifique ou un noeud d'un type spécifique pour lequel le message de signalisation (100) est destiné, **caractérisé en ce que** les moyens émetteurs (18) sont montés de manière à émettre le message de signalisation vers un noeud de rang inférieur par définition d'un trajet dans la structure arborescente, ledit trajet étant déterminé par une désignation de noeud possédant le niveau le plus bas, le noeud n'étant pas nécessairement la destination du message de signalisation.

2. Réseau de télécommunications (3) selon la revendication 1, **caractérisé en ce qu'**au moins un noeud (5, 6,7,8,9,10) de la seconde couche de noeuds comprend des moyens comparateurs (42) servant à comparer au moins une partie du code de type (102) qui est située dans le message de signalisation (100) transmis par le noeud (4,5,6) de la troisième couche de noeuds, avec au moins une valeur prédéterminée qui désigne une fonction de commande d'un type spécifique qui est présente dans le noeud à partir de la seconde couche de noeuds ou désigne le type du noeud (5,6, 7,8,9,10) à partir de la seconde couche de noeuds, le ou les noeuds importants (5,6,7,8,9,10) de la seconde couche de noeuds comprenant des moyens pour retenir le message de signalisation (100) pour un traitement, si la au moins une partie du code de type (102) correspond à la au moins une partie de la valeur prédéterminée.

3. Réseau de télécommunications (3) selon la revendication 2, **caractérisé en ce que** le noeud (5,6,7,8,9, 10) de la seconde couche de noeuds comprend des moyens d'acheminement (44) couplés aux moyens de comparaison (42) pour acheminer le message de signalisation (100) en fonction d'au moins une partie de la désignation de noeud (103), qui est située dans le message de signalisation (100), si le message de signalisation (100) n'est pas destiné au noeud (5,6,7,8,9,10) de la seconde couche de noeuds.

4. Noeud (4,5,6) d'une troisième couche de noeuds destiné à être utilisé dans un réseau de télécommunications (3) possédant une structure arborescente, lequel réseau comprend au moins :
- une première couche de noeuds située au niveau le plus bas et comprenant un nombre de noeuds (11,12,13,14,15, 16), lesquels noeuds forment les feuilles de la structure arborescente,
- une seconde couche de noeuds possédant un niveau plus élevé et comprenant un nombre de noeuds (5,6,7,8,9,10), et
- une troisième couche de noeuds ayant un niveau encore plus élevé, comprenant au moins un noeud (4,5,6),
le noeud (4,5,6) de la troisième couche de noeuds comprenant des moyens émetteurs (18) pour émettre un message de signalisation (100), dans lequel le noeud (4,5,6) de la troisième couche de noeuds comprend en outre des moyens d'adressage (24) pour envoyer, au message de signalisation (100), une désignation (103) d'un noeud (11,12,13, 14,15,16) associé au message de signalisation (100) à partir de la première couche de noeuds, et un code de type (102) qui désigne une fonction de commande d'un type spécifique ou un noeud d'un type spécifique pour lequel le message de signalisation (100) est destiné, **caractérisé par** des moyens pour émettre les messages de signalisation en direction d'un noeud de rang inférieur par définition d'un trajet dans la structure arborescente, ledit trajet étant déterminé par une désignation de noeud du niveau le plus bas, le noeud n'étant pas nécessairement la destination du message de signalisation.

5. Noeud (5,6,7,8,9,10) d'une seconde couche de noeuds destiné à être utilisé dans un réseau de télécommunications (3) possédant une structure arborescente, lequel réseau comprend au moins
- une première couche de noeuds située au niveau le plus bas et comprenant un nombre de noeuds (11,12,13,14,15, 16), lesquels noeuds forment les feuilles de la structure arborescente,
- une seconde couche de noeuds possédant un niveau plus élevé et comprenant un nombre de noeuds (5,6,7,8,9,10), et
- une troisième couche de noeuds ayant un niveau encore plus élevé, comprenant au moins un noeud (4,5,6),
le noeud (4,5,6) de la troisième couche de noeuds comprenant des moyens émetteurs (18) pour émettre un message de signalisation (100), dans lequel le noeud (4,5,6) de la troisième couche de noeuds comprend en outre des moyens d'adressage (24) pour envoyer, au message de signalisation (100), une désignation (103) d'un noeud (11,12,13,14,15,16) associé au message de signalisation (100) à partir de la première couche de noeuds, et un code de type (102) qui désigne une fonction de commande d'un type spécifique ou un noeud d'un type spécifique pour lequel le message de signalisation (100) est destiné, **caractérisé par** des moyens pour émettre des messages de signalisation en direction d'un noeud de rang inférieur par définition d'un trajet dans la structure arborescente, ledit trajet étant déterminé par une désignation de noeud du niveau le plus bas, le noeud n'étant pas nécessairement la destination du message de signalisation.
